# EUROPÄISCHE PATENTSCHRIFT

(11) **EP 2 245 323 B1**
(45) Veröffentlichungstag und Bekanntmachung des Hinweises auf die Patenterteilung: **03.01.2018**
(21) Anmeldenummer: 09704036.4
(22) Anmeldetag: 23.01.2009
(51) Int. Cl.: F16C 33/34, F16C 33/66, F16C 19/26

(54) **WÄLZKÖRPER MIT SCHMIERMITTELDEPOT SOWIE WÄLZKÖRPERLAGER**
ROLLING ELEMENT HAVING LUBRICANT DEPOT AND ROLLER BEARING
ÉLÉMENT ROULANT À RÉSERVOIR DE LUBRIFIANT ET PALIER À ROULEMENT

(30) Priorität: 26.01.2008 DE 102008006150
(43) Veröffentlichungstag der Anmeldung: 03.11.2010
(73) Patentinhaber: Schaeffler Technologies AG & Co. KG, 91074 Herzogenaurach (DE)
(72) Erfinder: FANDRE, Hans-Jürgen, 97714 Oerlenbach (DE); TIETZ, Alexander, 97502 Obbach (DE)
(86) Internationale Anmeldenummer: PCT/DE2009/000087
(87) Internationale Veröffentlichungsnummer: WO 2009/092367

(56) Entgegenhaltungen:
- JP-A- 2007 032 768

## Beschreibung

### Gebiet der Erfindung

Die Erfindung betrifft einen Wälzkörper für ein Wälzkörperlager mit einem Grundkörper, welcher eine Aufnahme aufweist, und mit einem Schmiermitteldepot, wobei das Schmiermitteldepot in der Aufnahme angeordnet ist, sowie ein Wälzkörperlager mit mindestens einem derartigen Wälzkörper.

Wälzkörperlager, wie zum Beispiel Kugellager oder Rollenlager, weisen üblicherweise eine Mehrzahl von Wälzkörpern auf, welche im Betrieb zwischen zwei Laufbahnen abwälzen. Bei Axial- oder Radialwälzlagern können die Laufbahnen beispielsweise auf Scheiben oder Ringen angeordnet sein, bei Linearwälzlagern sind die Laufbahnen auf einem Laufkörper angeordnet.

Es ist üblich, die Wälzkörper in dem Wälzkörperlager mit Schmierstoff zu versorgen. Hierbei ist es beispielsweise bekannt, eine externe Schmierstoffzuführung zu verwenden, welche im Betrieb ständig oder intervallartig dem Wälzkörperlager Schmierstoff zuführt. Bei einer möglichen Alternative werden vorgeschmierte bzw. lebensdauergeschmierte Wälzkörperlager eingesetzt, welche bereits bei der Fertigung mit einem Schmiermitteldepot gegebenenfalls für ihre gesamte Lebensdauer versehen sind.

Die Druckschrift JP2004-176771 A offenbart ein Kegelrollenlager mit einer Mehrzahl von Kegelrollen als Wälzkörper, wobei mindestens eine Kegelrolle ein integriertes Schmierstoffdepot aufweist. Insbesondere wird eine Herstellmethode für feststoffgeschmierte Kegelrollen dargelegt, wobei die Kegelrolle eine gestufte und kegelstumpfförmige Durchgangsöffnung erhält, in die ein Formstück aus einem Festschmierstoff eingeführt wird.

Die Druckschrift JP2007-032768 A zeigt eine als Sacklochbohrung ausgebildete Aufnahme in einem Wälzkörper, die mit einem Schwann oder einem porösen Material ausgefüllt ist.

Der Erfindung liegt die Aufgabe zu Grunde, einen Wälzkörper für ein Wälzkörperlager bzw. ein entsprechendes Wälzkörperlager vorzuschlagen, welcher eine verbesserte Schmierung aufweist.

Diese Aufgabe wird durch einen Wälzkörper mit den Merkmalen des Anspruchs 1 sowie mit einem Wälzkörperlager mit den Merkmalen des Anspruchs 10 gelöst. Bevorzugte oder vorteilhafte Ausführungsformen der Erfindung ergeben sich aus den Unteransprüchen, der nachfolgenden Beschreibung und/oder den beigefügten Figuren.

Der Wälzkörper gemäß der Erfindung ist für ein Wälzkörperlager geeignet und/oder ausgebildet und weist einen Grundkörper auf, an dessen Außenseiten Kontakt- bzw. Wälzflächen angeordnet sind, die im Betrieb auf korrespondierenden Laufbahnen abwälzen. Der Wälzkörper kann in der allgemeinsten Ausführung der Erfindung eine beliebige Form aufweisen, insbesondere kann der Wälzkörper als eine Kugelrolle, Kegelrolle oder Zylinderrolle etc. ausgebildet sein. Das Wälzkörperlager kann als ein Axial, Radiallager oder als ein Linearlager realisiert sein. Prinzipiell ist der erfindungsgemäße Wälzkörper in jeder Bauform von Wälzkörperlagern einsetzbar. Das Material des Grundkörpers ist bevorzugt Metall, insbesondere Stahl, alternativ können auch Kunststoff, Keramik oder Buntmetall zum Einsatz kommen.

Der Grundkörper weist eine Aufnahme, also insbesondere eine Aussparung auf, welche so dimensioniert ist, dass ein Schmiermitteldepot in der Aufnahme angeordnet werden kann.

Das Schmiermitteldepot umfasst ein festes oder flüssiges Schmiermittel, insbesondere ein Öl oder ein Fett oder ein beliebiges anderes Schmiermittel. Das Schmiermitteldepot ist in dem Wälzkörper festgelegt oder integriert und wird gemeinsam mit diesem im Betrieb bewegt.

Erfindungsgemäß wird vorgeschlagen, eine Haltevorrichtung für das Schmiermitteldepot zu verwenden, welche in der Aufnahme angeordnet ist und zumindest abschnittsweise eine randseitige Begrenzungsfläche für das Schmiermittedepot bildet und insbesondere das Schmiermitteldepot seitlich begrenzt.

Eine Überlegung der Erfindung ist darin zu sehen, dass die Festlegung des Schmiermitteldepots, wie sie aus dem Stand der Technik bekannt ist, anfällig gegenüber Verletzungen des Schmiermitteldepots bei oder nach der Montage ist, da das Formstück sehr empfindlich ist. Im schlechtesten Fall, kann eine Verletzung des Formstücks zu einer ungenügenden Füllung des Wälzkörpers mit Schmierstoff führen.

Demgegenüber wird in der Erfindung vorgeschlagen, eine ergänzende, als Kapsel ausgebildete Haltevorrichtung zu verwenden, welche eine randseitige Begrenzungsfläche für das Schmiermitteldepot bildet und dieses in der Aufnahme fixiert. Insbesondere dient die Begrenzungsfläche zur formschlüssigen Aufnahme oder Anlage des Schmiermitteldepots. Mit der erfindungsgemäßen Weiterbildung wird das Schmiermitteldepot zumindest im Bereich der Begrenzungsfläche gegenüber Verletzungen geschützt.

Bei einer bevorzugten Ausführungsform der Erfindung ist die Aufnahme als eine Durchgangsöffnung, insbesondere durch ein Rotationszentrum oder längs einer Rotationsachse des Wälzkörpers realisiert. Bei dieser Ausführungsform kann das Schmiermittel des Schmiermitteldepots an zwei Ausgangsseiten der Aufnahme in das Wälzkörperlager ausgebracht werden.

Bei einer weiteren Alternative der Erfindung ist die Aufnahme als ein Sackloch ausgebildet, weist somit nur eine Ausgangsseite für das Schmiermittel auf.

Bei einer fertigungstechnisch günstig herstellbaren Variante zeigt die Aufnahme über deren Tiefenerstreckung durch den Wälzkörper einen konstanten Querschnitt. Besonders bevorzugt ist die Aufnahme als eine Bohrung ausgebildet. Der freie Durchmesser der Bohrung beträgt beispielsweise weniger als die Hälfte des Durchmessers des Wälzkörpers, um eine ausreichende Stabilität des Wälzkörpers zu gewährleisten.

Bei alternativen Ausführungsformen der Erfindung weist die Aufnahme über deren Tiefenerstreckung einen variablen Querschnitt auf. Insbesondere kann die Aufnahme an die Form des Wälzkörpers angepasst sein (z.B. konisch für Kegelrollen). Eine mögliche Ausführungsform liegt darin, dass der Querschnitt zumindest abschnittsweise parallel zu der Wälzfläche des Wälzkörpers oder zumindest annähernd parallel dazu verläuft. Beispielsweise kann eine Kegelrolle eine konusförmige Aufnahme aufweisen. Bei einer anderen Ausführungsform zeigt die Aufnahme an einer oder beiden Ausgangsseiten eine trichterförmige Verbreiterung, um das Schmiermittel besser aus der Aufnahme ausbringen zu können. Kombinationen dieser Ausführungsformen sind ebenfalls möglich.

Es ist bevorzugt, dass die Begrenzungsflächen eine Halte- und/oder eine Dosierfunktion für das Schmiermittel umsetzen.

Bei einer konstruktiven Realisierung der Erfindung bildet die Haltevorrichtung an einer oder an beiden Ausgangsseiten der Aufnahme eine vorzugsweise senkrecht zu der Tiefenerstreckung der Aufnahme ausgerichtete Begrenzungsfläche bzw. -flächen für das Schmiermitteldepot, welche die Ausgangsseiten abdecken.

In einer besonders bevorzugten Ausführungsform ist die Begrenzungsfläche als Teil eines Deckelabschnitts ausgebildet, wobei der Deckelabschnitt bevorzugt eine oder mehrere Löcher aufweist, durch die das Schmiermittel austreten kann, so dass die Begrenzungsfläche die Dosierfunktion umsetzt. Optional kann der Deckelabschnitt in einen Hülsenabschnitt übergehen, welcher sich radial außenseitig an der Aufnahme abstützt, wobei der Deckelabschnitt dann verstärkt die Haltefunktion realisiert.

Bei der erfindungsgemäßen Umsetzung des Wälzkörpers ist die Haltevorrichtung als eine Kapsel ausgebildet. Diese Kapsel kann bei der Montage des Wälzkörpers bzw. des Wälzkörperlagers als schmiermittelgefüllte Einheit in die Aufnahme beispielsweise eingesteckt, eingeschoben und/oder eingepresst werden.

Dabei kann die Kapsel einteilig ausgebildet sein und das Schmiermitteldepot bis auf Austrittslöcher vollständig umschließen. Diese Kapsel kann besonders einfach in den Wälzkörper eingesetzt oder - z.B. bei Wartungsarbeiten - ausgetauscht werden.

Alternativ kann die Kapsel mehrteilig, bevorzugt zweiteilig ausgebildet sein. Hierbei kann die Kapsel zusammensteckbar ausgebildet sein, so dass die Kapsel in einem ersten Schritt mit dem Schmiermittel gefüllt und in einem zweiten Schritt zusammengesteckt und dann in den Wälzkörper eingeführt wird. Es ist auch denkbar, dass die Kapsel eine oder mehrere Teilungsebenen aufweist, vorzugsweise eine Teilungsebene welche die Kapsel in Tiefenerstreckung in der Aufnahme mittig teilt, so dass im Bereich der Teilungsebenen Spalte, insbesondere Ringspalte für einen kontrollierten Austritt des Schmiermittels gegeben sind.

Bei einer nicht erfindungsgemäßen Ausführungsform ist die Haltevorrichtung als eine Hülse oder ein anderer Körper ausgebildet, die bzw. der an der bzw. den Ausgangsseiten der Aufnahme geöffnet ist. Diese Ausführungsform setzt im Wesentlichen nur die Haltefunktion um.

Bei einem weiteren nicht erfindungsgemäßen Gegenstand ist das Schmiermitteldepot als ein mit Schmiermittel getränkter Schwamm ausgebildet. Der Schwamm kann elastisch oder komprimierbar ausgebildet sein, so dass dieser sich elastisch gegen die Aufnahme abstützt und dadurch das Schmiermitteldepot kraft- bzw. reibschlüssig in der Aufnahme und/oder in der Haltevorrichtung festlegt.

Ein weiterer Gegenstand der Erfindung betrifft ein Wälzkörperlager mit einem oder mehreren Wälzkörpern nach einem der vorhergehenden Ansprüche.

Das Wälzkörperlager kann als abgedichtetes Wälzkörperlager ausgebildet sein, wobei der Wälzkörperraum durch Dichtungen, insbesondere Dichtungsringe, abgeschlossen ist, um auf diese Weise z.B. eine Lebensdauerschmierung des Wälzkörperlagers umzusetzen, Bei dieser Ausführungsform wird erreicht, dass trotz des geringen Freiraums in dem abgedichteten Wälzkörperraum eine ausreichende Schmiermittelmenge deponiert werden kann.

Bei einer alternativen Ausführungsform ist das Wälzkörperlager als ein offenes Lager ausgebildet, welches zusätzlich mit einem Schmiermitteldepot ausgestattet werden soll.

Weitere Merkmale, Vorteile und Wirkungen der Erfindung ergeben sich aus der nachfolgenden Beschreibung bevorzugter Ausführungsbeispiele der Erfindung sowie den beigefügten Figuren. Dabei zeigen:
- Figur 1: eine schematische Längsschnittdarstellung durch eine Rolle eines Wälzkörperlagers als ein erstes Ausführungsbeispiel der Erfindung;
- Figur 2: eine schematische Längsschnittdarstellung durch eine Rolle eines Wälzkörperlagers als ein zweites Ausführungsbeispiel der Erfindung;
- Figur 3: eine schematische Längsschnittdarstellung durch eine Rolle eines nicht erfindungsgemäßen Wälzkörperlagers.

Einander entsprechende oder gleiche Bestandteile sind in den Figuren jeweils mit gleichen oder entsprechenden Bezugszeichen versehen.

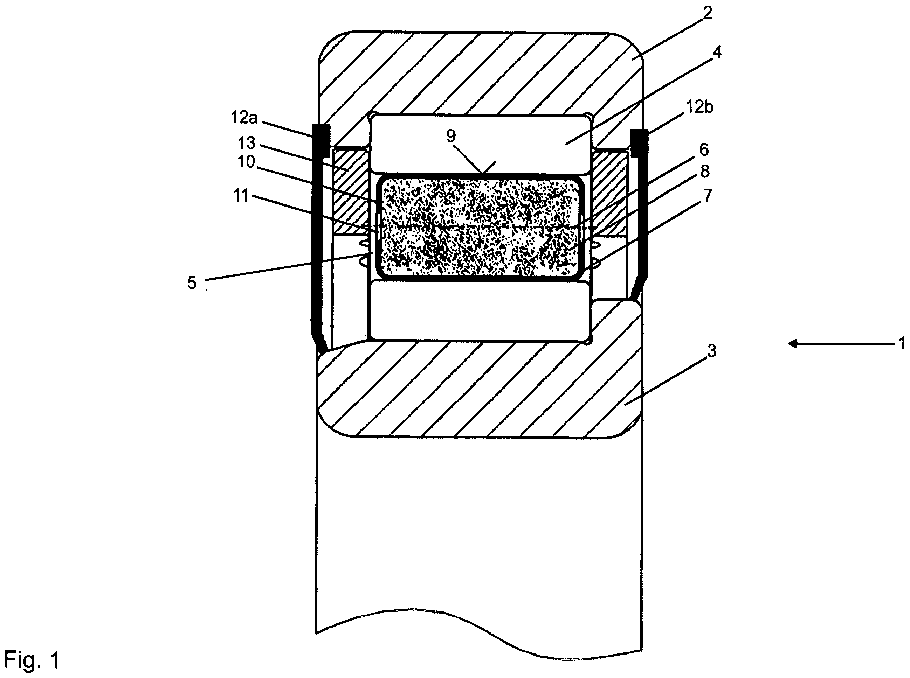

Die Figur 1 zeigt in einer schematischen Längsschnittdarstellung eines Ausschnitts eines Wälzlagers 1 einen Außenring 2, einen Innenring 3 sowie eine Rolle 4, welche zwischen dem Außenring 2 und dem Innenring 3 abwälzt. Der Außenring 2 weist zwei seitliche Borde auf, welche die Rolle 4 seitlich führen. Der Innenring 3 zeigt dagegen nur auf der rechten Seite einen Bord zur Führung der Rolle 4. Die Rolle 4 bildet den Wälzkörper, welcher auf Laufbahnen des Außenrings 2 und des Innenrings 3 abrollt und weist eine zylinderförmige Gestalt auf.

Die Rolle 4 zeigt eine Durchgangsöffnung 5, welche als Bohrung mit konstantem Querschnitt ausgebildet ist und sich symmetrisch zu der Drehachse 6 der Rolle 4 erstreckt.

Der Durchmesser der Durchgangsöffnung 5 ist so dimensioniert, dass dieser in axialer Projektion überlappungsfrei zu den Borden der Ringe 2 und 3 angeordnet ist.

In der Durchgangsöffnung 5 ist eine Kapsel 7 aufgenommen und form-und/oder reibschlüssig festgelegt. Die Kapsel 7 weist eine Außenwandung auf, welche im gezeigten Längsschnitt rechteckig ausgebildet ist, wobei die Seitenfläche 9 parallel zu der Wälzfläche der Rolle 4 und die Deckelflächen 10 senkrecht zu der Rotationsachse der Rolle 4 angeordnet bzw. ausgerichtet sind und etwas in die Aufnahme 5 versetzt angeordnet sind. Die Kapsel 7 dient zur Aufnahme eines Schmiermitteldepots 8 und ist beispielsweise aus Kunststoff gefertigt.

In den Deckelabschnitten 10 zeigt die Kapsel 7 Löcher 11, welche den Austritt von Schmiermittel aus dem Schmiermitteldepot 8 in das Wälzkörperlager 1 im Betrieb erlauben. Das Schmiermittedepot 8 ist durch ein flüssiges oder festes Schmiermittel, insbesondere Öl oder Fett, gebildet, welches optional in einem Trägersubstrat, wie zum Beispiel einem porösen Körper oder einem Schwamm aufgesogen ist.

Im Betrieb tritt das Schmiermittel aus dem Schmiermitteldepot 8 durch die Löcher 11 zeitlich stark verzögert aus, so dass eine Schmiermittelversorgung des Wälzkörperlagers 1 über sehr lange Betriebszeiten gewährleistet ist.

Das in der Figur 1 gezeigte Wälzkörperlager 1 ist als ein lebensdauergeschmiertes Lager ausgebildet und weist beidseitig jeweils eine Dichtung 12 a, b auf, welche den Wälzkörperraum gegenüber Umwelteinflüssen abdichten. Optional weist das Wälzkörperlager 1 einen Käfig 13 auf.

Bei der Fertigung der Rolle 4 kann die Kapsel 7 mit dem Schmiermitteldepot 8 in einfacher Weise in die Rolle 4 eingeschoben oder bei Bedarf ausgetauscht werden.

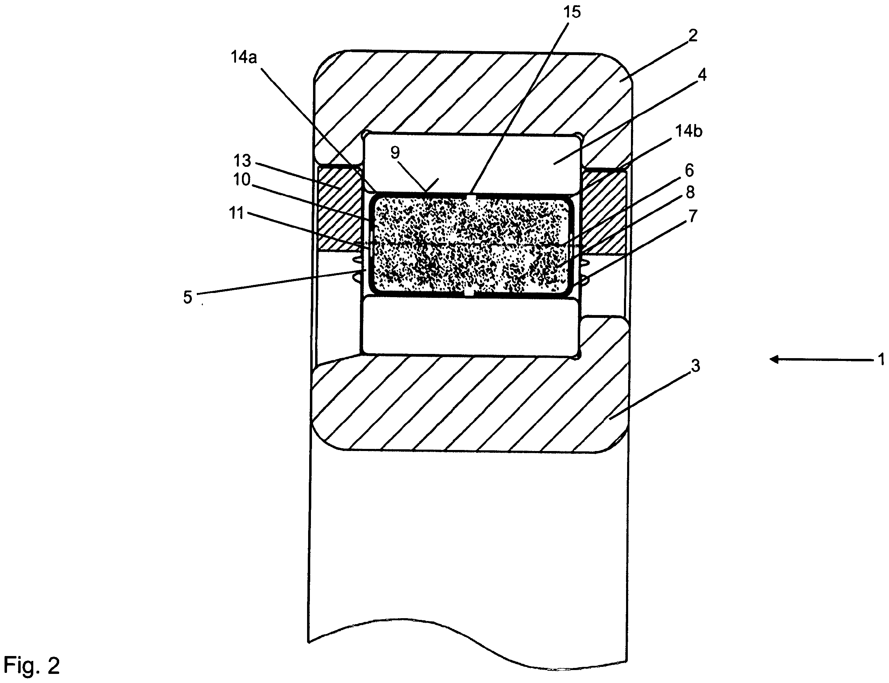

Die Figur 2 zeigt eine Abwandlung des ersten Ausführungsbeispiels in der Figur 1, wobei in Abgrenzung zu der Figur 1 die Kapsel 7 zweiteilig ausgebildet ist und eine erste napf- oder hutförmige Kapselhälfte 14 a und eine zweite Kapselhälfte 14 b aufweist. Beispielhaft ist das Wälzkörperlager 1 als ein offenes Lager ohne Dichtungen 12 a,b gezeigt. Die Kapselhälften 14 a und b sind in axialer Richtung voneinander beabstandet angeordnet und bilden gemeinsam einen Ringspalt 15, der ein Austreten des Schmiermittels aus dem Schmiermitteldepot 8 erlaubt.

Alternativ oder ergänzend zu den Löchern 11 in dem Deckelabschnitt 10 können bei den Ausführungsbeispielen in den Figuren auch Löcher oder Auslassungen in der Seitenfläche 9, wie zum Beispiel der Ringspalt 15, vorgesehen sein.

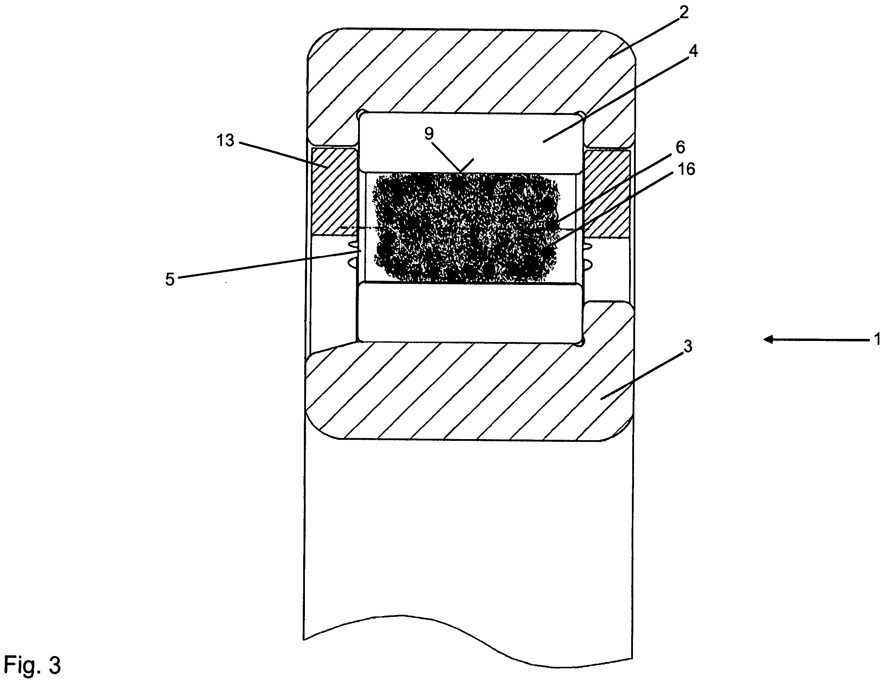

Die Figur 3 zeigt in gleicher Darstellung ein nicht erfindungsgemäßes Ausführungsbeispiel der Erfindung, wobei statt der Kapsel 7 in der Aufnahme 5 der Rolle 4 ein Schwamm 16 eingesetzt ist, welcher mit dem Schmiermittel getränkt ist. Bevorzugt ist der Schwamm 16 elastisch ausgebildet, so dass dieser in der Aufnahme 5 festgeklemmt ist.

### Bezugszeichenliste

- 1: Wälzlager, Wälzkörperlager
- 2: Außenring
- 3: Innenring
- 4: Rolle
- 5: Durchgangsöffnung, Aufnahme
- 6: Drehachse
- 7: Kapsel
- 8: Schmiermitteldepot
- 9: Seitenfläche
- 10: Deckelfläche
- 11: Löcher
- 12 a, b: Dichtung
- 13: Käfig
- 14 a: 1. Kapselhälfte
- 14 b: 2. Kapselhälfte
- 15: Ringspalt
- 16: Schwamm

## Patentansprüche

1. Wälzkörper (4) für ein Wälzkörperlager (1)
mit einem Grundkörper, welcher eine Aufnahme (5) aufweist, und
mit einem Schmiermitteldepot (8),
wobei das Schmiermitteldepot (8) in der Aufnahme (5) angeordnet ist, **gekennzeichnet durch**
eine Haltevorrichtung (7), die in der Aufnahme (5) angeordnet ist und eine randseitige Begrenzungsfläche (9, 10) für das Schmiermitteldepot (8) bildet, wobei die Haltevorrichtung als eine Kapsel (7) ausgebildet ist.

2. Wälzkörper (4) nach Anspruch 1, **dadurch gekennzeichnet, dass** die Aufnahme als Durchgangsöffnung (5) realisiert ist.

3. Wälzkörper (4) nach Anspruch 1, **dadurch gekennzeichnet,**
**dass** die Aufnahme (5) als ein Sackloch ausgebildet ist.

4. Wälzkörper (4) nach einem der vorhergehenden Ansprüche, **dadurch gekennzeichnet, dass** die Aufnahme (5) über deren Tiefenerstreckung einen konstanten Querschnitt aufweist.

5. Wälzkörper (4) nach einem der Ansprüche 1 bis 3, **dadurch gekennzeichnet, dass** die Aufnahme (5) über deren Tiefenerstreckung einen variablen Querschnitt aufweist, wobei die Wandungen bevorzugt parallel zu der Walzfläche verlaufen.

6. Wälzkörper (4) nach einem der vorhergehenden Ansprüche, **dadurch gekennzeichnet, dass** die Haltevorrichtung (7) an einer oder beiden Ausgangsseiten der Aufnahme die Begrenzungsfläche (9) bzw. - flächen für das Schmiermitteldepot (8) bildet.

7. Wälzkörper (4) nach Anspruch 6, **dadurch gekennzeichnet, dass** die Begrenzungsfläche (9) als ein Deckelabschnitt mit einem oder mehreren Durchgangslöchern (11) ausgebildet ist.

8. Wälzkörper (4) nach einem der Ansprüche 1 bis 7, **dadurch gekennzeichnet, dass** die Kapsel (7) einteilig ausgebildet ist.

9. Wälzkörper (4) nach einem der Ansprüche 1 bis 7, **dadurch gekennzeichnet, dass** die Kapsel (7) zwei- oder mehrteilig ausgebildet ist.

10. Wälzkörperlager (1) mit einem oder mehreren Wälzkörpern (1) nach einem der vorhergehenden Ansprüche.

11. Wälzkörperlager (1) nach Anspruch 10, **dadurch gekennzeichnet, dass** der Wälzkörperraum durch Dichtungen (12a, 12b) abgeschlossen ist.

## Claims

1. Rolling body (4) for a rolling body bearing (1) having a main body which has a receptacle (5), and having a lubricant reservoir (8), the lubricant reservoir (8) being arranged in the receptacle (5), **characterized by** a holding apparatus (7) which is arranged in the receptacle (5) and forms an edge-side bounding face (9, 10) for the lubricant reservoir (8), the holding apparatus being configured as a capsule (7).

2. Rolling body (4) according to Claim 1, **characterized in that** the receptacle is realized as a through opening (5).

3. Rolling body (4) according to Claim 1, **characterized in that** the receptacle (5) is configured as a blind bore.

4. Rolling body (4) according to one of the preceding claims, **characterized in that** the receptacle (5) has a constant cross section over its depth extent.

5. Rolling body (4) according to one of Claims 1 to 3, **characterized in that** the receptacle (5) has a variable cross section over its depth extent, the walls preferably running parallel to the rolling face.

6. Rolling body (4) according to one of the preceding claims, **characterized in that** the holding apparatus (7) forms the bounding face (9) or faces for the lubricant reservoir (8) on one or both outlet sides of the receptacle.

7. Rolling body (4) according to Claim 6, **characterized in that** the bounding face (9) is configured as a cover section with one or more through holes (11).

8. Rolling body (4) according to one of Claims 1 to 7, **characterized in that** the capsule (7) is configured in one piece.

9. Rolling body (4) according to one of Claims 1 to 7, **characterized in that** the capsule (7) is configured in two or more pieces.

10. Rolling body bearing (1) having one or more rolling bodies (1) according to one of the preceding claims.

11. Rolling body bearing (1) according to Claim 10, **characterized in that** the rolling body space is closed off by way of seals (12a, 12b).

## Revendications

1. Elément roulant (4) pour un palier à roulement (1) avec un corps de base, qui présente un logement (5), et avec un réservoir de lubrifiant (8), dans lequel le réservoir de lubrifiant (8) est disposé dans le logement (5), **caractérisé par** un dispositif de maintien (7), qui est disposé dans le logement (5) et qui forme une face de limitation de bord (9, 10) pour le réservoir de lubrifiant (8), dans lequel le dispositif de maintien est réalisé sous forme de capsule (7).

2. Elément roulant (4) selon la revendication 1, **caractérisé en ce que** le logement est réalisé sous forme d'ouverture de passage (5).

3. Elément roulant (4) selon la revendication 1, **caractérisé en ce que** le logement (5) est réalisé en forme de trou borgne.

4. Elément roulant (4) selon l'une quelconque des revendications précédentes, **caractérisé en ce que** le logement (5) présente une section transversale constante sur son extension en profondeur.

5. Elément roulant (4) selon l'une quelconque des revendications 1 à 3, **caractérisé en ce que** le logement (5) présente une section transversale variable sur son extension en profondeur, dans lequel les parois s'étendent de préférence parallèlement à la face de roulement.

6. Elément roulant (4) selon l'une quelconque des revendications précédentes, **caractérisé en ce que** le dispositif de maintien (7) forme sur un côté ou sur les deux côtés du logement la face ou les faces de limitation (9) pour le réservoir de lubrifiant (8).

7. Elément roulant (4) selon la revendication 6, **caractérisé en ce que** la face de limitation (9) est réalisée sous forme de partie de couvercle avec un ou plusieurs trou(s) de passage (11).

8. Elément roulant (4) selon l'une quelconque des revendications 1 à 7, **caractérisé en ce que** la capsule (7) est réalisée en une seule partie.

9. Elément roulant (4) selon l'une quelconque des revendications 1 à 7, **caractérisé en ce que** la capsule (7) est réalisée en deux ou plusieurs parties.

10. Palier à roulement (1) avec un ou plusieurs élément(s) roulant(s) (1) selon l'une quelconque des revendications précédentes.

11. Palier à roulement (1) selon la revendication 10, **caractérisé en ce que** l'espace des éléments roulants est fermé par des joints d'étanchéité (12a, 12b).
